**Europäisches Patentamt**

**European Patent Office**

**Office européen des brevets**

(19)

(11) Veröffentlichungsnummer: **0 293 668 B1**

(12)

# EUROPÄISCHE PATENTSCHRIFT

(45) Veröffentlichungstag der Patentschrift:
11.09.91 Patentblatt 91/37

(51) Int. Cl.⁵: **C08G 18/62, H01B 3/30,**
**C08G 18/80, C08G 18/79,**
**C09D 175/04**

(21) Anmeldenummer: 88107902.4

(22) Anmeldetag: 18.05.88

(54) **Lackbindemittel, ihre Verwendung in Beschichtungsmitteln, ein Verfahren zur Herstellung von Drahtlackierungen und eine Lackschicht aufweisende hitzeresistente Substrate.**

(30) Priorität: 30.05.87 DE 3718238

(43) Veröffentlichungstag der Anmeldung:
07.12.88 Patentblatt 88/49

(45) Bekanntmachung des Hinweises auf die
Patenterteilung:
11.09.91 Patentblatt 91/37

(84) Benannte Vertragsstaaten:
AT BE CH DE ES FR GB IT LI

(56) Entgegenhaltungen:
EP-A- 0 005 230
GB-A- 755 942
US-A- 3 077 462

(73) Patentinhaber: BAYER AG
W-5090 Leverkusen 1 Bayerwerk (DE)

(72) Erfinder: Dünwald, Willi, Dr.
Geschwister-Scholl-Strasse 16
W-5090 Leverkusen 1 (DE)
Erfinder: Schlegel, Hans
Habichtgasse 4
W-5090 Leverkusen 1 (DE)

EP 0 293 668 B1

EP 0 293 668 B1

## Beschreibung

Die Erfindung betrifft neue Lösungsmittel, Polyvinylacetale und spezielle Polyisocyanate mit blockierten Isocyanatgruppen enthaltende Lackbindemittel, deren Verwendung in Beschichtungsmitteln für hitzeresistente Substrate, ein Verfahren zur Horstellung von Drahtlackierungen unter Verwendung von diese Bindemittel enthaltenden Beschichtungsmitteln und eine entsprechende Lackschicht aufweisende, hitzeresistente Substrate.

Einbrennlacke auf Basis von Polyvinylacetalen, insbesondere für die Isolierung elektrischer Leiter, sind seit langem bekannt. So beschreibt beispielsweise die US-PS 2307588 Lacke auf Basis von Polyvinylacetalen, die als Zusatzmittel Phenolharze enthalten. Zwecke Verbesserung der Lösungsmittelbeständigkeit und Dauerwärmebeständigkeit der Lackierungen wird in der DE-AS 1179320 empfohlen, derartigen Beschichtungsmitteln blockierte Polyisocyanate einzuverleiben. Gemäß DE-AS 1153127 besteht eine weitere Verbesserung derartiger Beschichtungsmittel in der zusätzlichen Mitverwendung von Melaminharzen. Diese Viererkombination

— Polyvinylacetal (Polyvinylformal)
— blockiertes Polyisocyanat
— Phenolharz
— Melaminharz

hat sich unter den Bezeichnung "Hermetic-Formulierung" besonders bei der Herstellung solcher isolierter Drähte bewährt, die für gekapselte Aggregate von Kältemaschinen verwendet werden.

Die zuletzt genannte Bindemittelkombination hat sich während mehrerer Jahrzehnte in der Praxis für die Drahtlackierung bewährt. Überraschenderweise wurde jetzt jedoch gefunden, daß die guten Eigenschaften dieser Systeme nochmals deutlich verbessert werden können, wenn als Bindemittel solche der nachstehend näher beschriebenen erfindungsgemäßen Art verwendet werden, die im wesentlichen lediglich aus einer Polyvinylacetal- und einer speziellen Polyisocyanat-Komponente bestehen.

Unter Verwendung der nachstehend näher beschriebenen, erfindungsgemäßen Bindemittel ist insbesondere eine Erhöhung der Abriebfestigkeit, der Erweichungstemperatur und des Anstiegs des dielektrischen Verlustfaktors tan $\delta$ gemäß DIN 53483 möglich. Umgekehrt können die bereits guten Eigenschaften der Systeme gemäß genanntem Stand der Technik auch bei einer Erhöhung der Lackiergeschwindigkeit erreicht werden.

Ein weiterer Vorteil der erfindungsgemäßen Bindemittel ist in dem Umstand zu sehen, daß ausgezeichnete Lackeigenschaften auch dann erhalten werden, wenn Polyvinylacetale eines vergleichsweise niedrigen Molekulargewichts eingesetzt werden, d.h. wenn solche Polyvinylacetale verwendet werden, deren 10 gew.-%ige Lösung in Furfural eine vergleichsweise niedrige Viskosität aufweist. Es galt bisher die aus der Erfahrung sich ergebende Erkenntnis, daß ausreichende Eigenschaften nur unter Verwendung von Ausgangsstoffen mit hinreichend hohem Molekulargewicht erzielbar sind, weil beim Einbrennprozeß die zur Verfügung stehende Zeit zur Ausbildung sehr vieler Vernetzungsstellen nicht ausreicht oder die Vernetzung zu spontan verläuft, so daß die Lösemittel nur unter Störung des sich bildenden Films abdampfen können, was zu einer schlechten Oberflächenbeschaffenheit führt.

Die nun gefundene Möglichkeit, Produkte geringeren Molekulargewichtes verwenden zu können, macht damit die Verwendung von Lacken mit höherem Festgehalt möglich, was ein Vorteil sowohl im Hinblick auf die Wirtschaftlichkeit wie auch der Umweltbelastung darstellt.

Gegenstand der Erfindung sind zur Herstellung von Filmen und Überzügen geeignete, Lösungsmittel und Polyvinylacetal enthaltende Lackbindemittel, dadurch gekennzeichnet, daß sie Gemische aus

a) Polyvinylacetalen
b) (i) Carbodiimid- und/oder Uretonimingruppen und
    (ii) blockierte Isocyanatgruppen aufweisenden organische Verbindungen und
c) Lösungsmitteln und gegebenenfalls weiteren Hilfs- und Zusatzmitteln darstellen

wobei pro 100 Gew.-Teilen der Komponente a) 1 bis 300 Gew.-Teile der Komponente b) vorliegen.

Gegenstand der Erfindung ist auch die Verwendung dieser Bindemittel in Beschichtungsmittel für hitzeresistente Substrate, insbesondere in Drahtlacken.

Gegenstand der Erfindung ist auch ein Verfahren zur Herstellung von Drahtlackierungen durch Beschichtung von Drähten mit einem, Bindemittel, inerte Lösemittel und gegebenenfalls die aus der Lacktechnologie üblichen Hilfs- und Zusatzmittel enthaltenden Drahtlack unter anschließender Aushärtung der Beschichtung bei Temperaturen von oberhalb 80°C, dadurch gekennzeichnet, daß man solche Beschichtungsmittel verwendet, die als Bindemittel solche der genannten Art enthalten.

Gegenstand der Erfindung sind schließlich auch eine Lackschicht aufweisende, hitzeresistente Substrate, insbesondere Metalldrähte, wobei die Lackschicht durch Applikation eines Beschichtungsmittels und anschlie-

2

ßende Aushärtung des Beschichtungsmittels erhalten worden ist, dadurch gekennzeichnet, daß es sich bei dem Beschichtungsmittel um ein solches handelt, welches als Bindemittel solche der genannten Art enthält.

Bei der Komponente a) handelt es sich um Polyvinylacetale, wie sie in an sich bekannter Weise durch Reaktion von ganz oder teilweise hydrolysierten Polyvinylcarboxylaten, insbesondere Polyvinylacetat mit einem Aldehyd erhalten werden. Die erfindungsgemäß als Komponente a) geeigneten Polyvinylacetale weisen bei 23°C als 10 gew.-%ige Lösung in Furfural eine Viskosität von 20 bis 1500, vorzugsweise 90 bis 150 mPa.s auf. Vorzugsweise handelt es sich um ganz oder teilweise verseiftes Polyvinylacetat, dessen seitenständige Hydroxylgruppen ganz oder teilweise durch Reaktion mit Formaldehyd in Formalgruppen überführt worden sind. Besonders bevorzugt als Komponente a) geeignete Polyvinylacetale, d.h. Polyvinylformale sind solche, deren Gehalt an Acetat-, Hydroxyl- und Formalgruppen dem eines Gemischs aus mindestens 80 Gew.-% reinem Polyvinylformal, 9 bis 13 Gew.-% reinem Polyvinylacetat und 5 bis 6,5 Gew.-% reinem Polyvinylalkohol entspricht.

Grundsätzlich ist es auch möglich, als Komponente a) solche Polyvinylacetale einzusetzen, die durch Modifizierung eines zumindest teilweise verseiften Polyvinylcarboxylats, insbesondere -acetats mit anderen Aldehyden als Formaldehyd, beispielsweise mit Acetaldehyd, Propionaldehyd, Butyraldehyd oder Benzaldehyd erhalten worden sind. Auch Gemische unterschiedlicher Aldehyde können zur Modifizierung der zumindest teilweise verseiften Polyvinylcarboxylate verwendet werden.

Bei der erfindungsgemäßen Komponente b) handelt es sich um (i) Carbodiimid- und/oder Uretonimingruppen und (ii) blockierte Isocyanatgruppen aufweisende Verbindungen. Der Gehalt an Carbodiimidgruppen (berechnet als —N=C=N—) liegt im allgemeinen bei 0 bis 25 Gew.-%, vorzugsweise bei 1 bis 20 Gew.-%, der Gehalt an Uretonimingruppen (berechnet als Struktureinheiten der Bruttoformel $C_2N_3O$) liegt im allgemeinen bei 0 bis 30 Gew.-%, vorzugsweise bei 0 bis 25 Gew.-%, wobei die Summe aus Carbodiimid- und Uretonimingruppen (formal berechnet als —N=C=N—) im allgemeinen bei 0,5 bis 25 Gew.-%, vorzugsweise bei 1 bis 20 Gew.-%, liegt, und der Gehalt an blockierten Isocyanatgruppen (berechnet als NCO) liegt im allgemeinen bei 1 bis 25 Gew.-%, vorzugsweise bei 5 bis 22 Gew.-%.

Die Herstellung dieser Verbindungen kann dadurch erfolgen, daß man die Isocyanatgruppen eines organischen Polyisocyanats zu 10 bis 90%, vorzugsweise 20 bis 80% und insbesondere 30 bis 70%, durch Reaktion mit einem monofunktionellen Blockierungsmittel für Isocyanatgruppen blockiert und anschließend die noch verbleibenden freien Isocyanatgruppen zu 65 bis 100% unter Kohlendioxidabspaltung in Carbodiimidgruppen überführt.

Die in den Verbindungen gegebenenfalls vorliegenden Uretonimingruppen entstehen durch Anlagerung der gegebenenfalls noch vorliegenden freien Isocyanatgruppen an die gebildeten Carbodiimidgruppen. Die Herstellung dieser Verbindungen ist in der deutschen Patentanmeldung P 3600766.8 (DE-OS 3600766) im Detail beschrieben, wobei die dort als bevorzugt herausgestellten Ausführungsformen bzw. Ausgangsmaterialien auch im Rahmen der vorliegenden Erfindung bevorzugt sind.

In den erfindungsgemäßen Bindemitteln liegen pro 100 Gew.-Teilen der Komponente a) 1 bis 300, vorzugsweise 20 bis 220 Gew.-Teile der Komponente b) vor. Bei relativ geringen Mengen der Komponente b) werden letztendlich flexible Flächengebilde, d.h. insbesondere Lacküberzüge, erhalten, während mit steigendem Anteil der Komponente b) die Härte und auch die Chemikalienbeständigkeit der Überzüge ansteigt.

In den erfindungsgemäßen Bindemitteln liegen als weitere Komponente c) Lösungsmittel und gegebenenfalls sonstige Hilfs- und Zusatzstoffe vor.

Geeignete Lösungsmittel sind beispielsweise Phenol, Kresole, Xylenole, Benzylalkohol oder Gemische dieser Lösungsmittel bzw. Gemische dieser Lösungsmittel mit Verschnittmitteln wie Alkylbenzolen, Glykolethern, Glykoletheracetaten der an sich bekannten Art.

Weitere, gegebenenfalls mitzuverwendende Hilfsmittel sind Katalysatoren, beispielsweise solche der in DE-AS 2626175, Kolonne 7, Zeile 85 bis Kolonne 8, Zeile 87 beschriebenen Art. Gut geeignet sind auch Umsetzungsprodukte von Aminen mit Carbonylverbindungen, beispielsweise das Anlagerungsprodukt von Anilin an Butyraldehyd oder organische Metallkatalysatoren wie beispielsweise Zinkstearat, Zinn(II)-octoat, Dibutylzinndilaurat, Titantetrabutylat oder Triethanolamin-titanat. Die Katalysatoren werden, falls überhaupt, in einer Menge von 0,01 bis 5,0, vorzugsweise 0,1 bis 3,0 Gew.-%, bezogen auf die Menge der Komponenten a) und b), mitverwendet.

Weitere, gegebenenfalls mitzuverwendende Hilfs- und Zusatzmittel sind beispielsweise blockierte Isocyanatgruppen aufweisende Polyisocyanate, die nicht der Komponente b) entsprechen, beispielsweise das phenolblockierte, Isocyanuratgruppen aufweisende Trimerisat von 2,4-Diisocyanatotoluol ; gegenüber Isocyanatgruppen reaktionsfähige Verbindungen, wie sie bislang bei der Drahtlackierung zum Einsatz gelangten, und wie sie beispielsweise in DE-OS 3600766 beschrieben sind ; Phenolharze, Melaminharze, Amidimide, Polyepoxide, Imidester, Imidesterimide und/oder Hydantoine. Diese, gegebenenfalls als Hilfs- und Zusatzmittel mitzuverwendenden Komponenten können zur Variation der Eigenschaften der erfindungsgemäßen Bindemittel bzw. der erfindungsgemäß erhaltenen Lacküberzüge dienen. So kann beispielsweise die Erweichungstemperatur der letztendlich erhaltenen Lackfilme durch Mitverwendung von Melaminharzen und/oder von Phenolharzen der beispielsweise in den vorstehend genannten Literaturstellen genannten Art auf über 400°C angehoben werden.

Die durch Abmischung bei Raumtemperatur aus den genannten erfindungswesentlichen Einzelkomponenten und gegebenenfalls Hilfs- und Zusatzmitteln erhaltenen Gemische bzw. die die erfindungsgemäßen Bindemittel enthaltenden, gebrauchsfertigen Beschichtungsmittel, sind bei Raumtemperatur oder mäßig erhöhter Temperatur (bis ca. 50°C) lagerbeständig. Die unter Verwendung der gebrauchsfertigen Beschichtungsmittel hergestellten Flächengebilde werden bei Temperaturen von oberhalb 80°C, vorzugsweise 140 bis 700°C und insbesondere 200 bis 500°C unter gleichzeitigem Verdampfen der gegebenenfalls vorliegenden flüchtigen Bestandteile (z.B. Lösungsmittel) in vernetzte Kunststoffe überführt.

Bei dieser Vernetzungsreaktion erfolgt eine Vernetzung der weitgehend linearen Polyvinylacetale mit der Polyisocyanatkomponente b), wobei der genaue Mechanismus dieser Vernetzungsreaktion nicht bekannt ist. Die erfindungsgemäßen Vorteile sind offensichtlich auf das Vorliegen der Carbodiimid- und/oder Uretonimingruppierungen in der Komponente b) zurückzuführen.

Bei der erfindungsgemäßen Verwendung zur Herstellung von Lackierungen von hitzeresistenten Substraten, insbesondere beim erfindungsgemäßen Verfahren zur Herstellung von Drahtlackierungen können die Beschichtungsmittel nach allen bekannten Methoden der Beschichtungstechnologie auf geeignete Substrate aufgetragen werden, worauf sich eine Aushärtung der Beschichtung innerhalb der obengenannten Temperaturbereiche anschließt. Geeignete Substrate sind beispielsweise Metalle, Keramik, Glasfasern oder -gewebe. Besonders bevorzugte Substrate sind Metalldrähte.

Bei der bevorzugten Drahtlackierung erfolgt die Beschichtung der Drähte nach den an sich bekannten Tauch-, Rollenauftrag- oder Düsenabstreiferverfahren, worauf sich die Trocknung, d.h. die Aushärtung der Lackschichten in den üblichen Trockenöfen innerhalb der genannten Temperaturbereiche anschließt.

Aufgrund der aufgezeichneten elektrischen und mechanischen Eigenschaften der ausgehärteten Flächengebilde eignen sich die erfindungsgemäßen Bindemittel auch zur Herstellung von Isoliergeweben oder zur Imprägnierung von Elektromotoren.

In den nachfolgenden Beispielen beziehen sich alle Prozentangaben auf Gewichtsprozente.

**Beispiel 1 (Vergleichsbeispiel unter Verwendung eines handelsüblichen Polyvinylformallacks)**

100 Gew.-Teile eines handelsüblichen Polyvinylformalharzes (®Vinylec F/L der Fa. Chisso Corporation-/Japan), dessen 10%ige Lösung in Furfural eine Viskosität von ca. 120 mPa.s aufweist, und dessen Gehalt an Acetat-, Hydroxyl- und Formalgruppen dem eines Gemischs aus ca. 11% reinem Polyvinylacetat, ca. 6% reinem Polyvinylalkohol und ca. 83% reinem Polyvinylformal entspricht, werden zusammen mit 60 Gew.-Teilen eines Adduktes aus 1 Mol Trimethylolpropan, 3 Mol 2,4-Diisocyanatotoluol und 3 Mol Phenol, 16,7 Gew.-Teilen einer handelsüblichen Lösung eines Phenol-Formaldehyd-Harzes mit einem Festkörpergehalt von 60% (®Phenodur PR der Fa. Hoechst AG) und 13,6 Gew.-Teilen einer handelsüblichen Lösung eines Melaminformaldehydharzes mit einem Festkörpergehalt von 55% (®Maprenal MF 800 der Firma Hoechst AG) in einem Lösergemisch aus gleichen Gewichtsteilen Kresol und Xylol so gelöst, daß der Festkörpergehalt 20% beträgt. Die Durchlaufzeit im DIN-Becher 4 mm bei 23°C beträgt 150 Sekunden. Als Katalysator werden dem Lack 1,8 Gew.-Teile eines handelsüblichen Butyraldehyd-Anilin-Kondensats (®Vulkacit 576 der Firma Rheinchemie, Mannheim) zugesetzt.

Der so hergestellte Vergleichslack wird wie nachstehend beschrieben verarbeitet.

**Beispiel 2 (erfindungsgemäßer Lack)**

Herstellung einer erfindungsgemäßen Komponente b) :

Eine Mischung aus 2,500 g 4,4'-Diisocyanatodiphenylmethan und 1,740 g 2,4-Diisocyanatotoluol und 2,6-Diisocyanatotoluol (Gewichtsverhältnis = 8 : 2) wird innerhalb 1 Stunde bei 80°C mit 2,160 g Kresol versetzt und ca. 4 Stunden bei 100 bis 120°C reagieren gelassen. Nach Erreichen eines NCO-Gehalts von 13,2% ($NCO._{theor.}$ = 13,1%) wird mit 2,740 g Glykolmonomethyletheracetat verdünnt.

Man katalysiert die Carbodiimidbildung durch Zugabe von 20 g Methylphospholinoxid (einem technischen Gemisch aus 1-Methyl-1-phospha-2-cyclopenten-1-oxid und 1-Methyl-1-phospha-3-cyclopenten-1-oxid) bei 60°C. Nach ca. 15 Stunden erreicht die $CO_2$-Entwicklung einen Endwert bei 201 1 (ca. 90% der theoretisch maximalen Menge).

Man erhält die Lösung eines blockierten Polyisocyanats mit folgenden Kenngrößen :

4

| Konzentration | : ca. 70%ig |
| Viskosität (23°C) | : 4600 mPa.s |
| freier NCO-Gehalt | : < 0,1% |
| blockierter NCO-Gehalt (berechnet als NCO) | : 9,6% |
| IR | : 2,140 cm$^{-1}$ |
| Carbodiimid-Gehalt (berechnet als —N=C=N— aus $CO_2$-Menge) | : 2,9% |
| Uretonimin-Gehalt (berechnet als $C_2N_3O$ aus $CO_2$-Menge) | : 2,2% |

100 Gew.-Teile des in Beispiel 1 beschriebenen Polyvinyl-Formalharzes werden in 614 Gew.-Teilen eines Lösergemisches aus gleichen Teilen Kresol und Xylol gelöst. Die erkaltete Lösung wird dann mit 86 Gew.-Teilen der 70%igen Lösung des blockierten, Carbodiimid- und Uretonimidgruppen enthaltenden Polyisocyanates versetzt und zu dieser Lösung 1,6 Gew.-Teile ®Vulkacit 576 zugegeben.

Der so hergestellte Lack hat einen Festgehalt von 20%.

Die nach Beispiel 1 bzw. 2 hergestellten Lacklösungen werden auf einer vertikalen Drahtlackieranlage Typ MAG VE 5 von 5 m Länge bei einer Ofentemperatur von 500°C auf einen Kupferlackdraht appliziert. Die Durchmesserzunahme durch die Lackierung beträgt ca. 55 μm und wurde in 10 Einzelaufträgen erzielt. Es wird mit Abstreiferdüsen gearbeitet, die folgendermaßen abgestuft waren : 0,76/0,77/0,78/0,79/0,80/0,81/0,82/0,83/0,84/0,85 mm.

Die in Tabelle 1 wiedergegebene Gegenüberstellung des Lackdrahtes entsprechend dem Stand der Technik und des erfindungsgemäßen Lackdraht macht die erzielten großen Verbesserungen deutlich. Die gewählte Drahtlackiergeschwindigkeit betrug 70 Meter/min.

## Tabelle 1

| | Beispiel 1 Stand der Technik | Beispiel 2 erfindungsgemäß |
|---|---|---|
| tan δ-Knickpunkt | 100° C | 150° C |
| Abriebfestigkeit (Doppelhübe / Auflagegewicht: 390 g) | 20 | 80 |
| Erweichungstemperatur der Lackierung (DIN 46 453.2) | 290° C | 350° C |

Der "tan δ-Knickpunkt" bezeichnet die Temperatur, bei welcher ein Anstieg des dielektrischen Verlustfaktors gemäß DIN 53483 erfolgt. Der dielektrische Verlustfaktor tan δ ist ein Maß für die Energieverluste, die dadurch entstehen, daß ein Teil der Energie des elektrischen Feldes zur Erwärmung verbraucht wird.

Vor der Prüfung wird die Drahtprobe mit einer wäßrigen Graphitdispersion überstrichen und 2 Stunden bei etwa 90°C getrocknet.

Der dielektrische Verlustfaktor wird zwischen Kupferleiter und Graphitüberzug gemessen.

Mißt man diesen Wert in Abhängigkeit von der Temperatur, so erfolgt bei einer bestimmten Temperatur ein Anstieg des gemessenen Werts (= "tan δ-Knickpunkt"). Die Temperatur ist ein Maß für die Wärmebeständigkeit der Lackschicht.

Die Abriebfestigkeit wurde nach folgender Methode bestimmt :

Der zu prüfende Kupferdraht wird im rechten Winkel mit einem Stahlstift belastet, auf den ein nach Drahtdurchmesser und Lackschichtdicke genormtes Gewicht einwirkt. Zwischen Stahlstift und Kupfer wird eine elektrische Spannung angelegt. Der Stahlstift wird in einer Hin- und Rückbewegung über den Prüfdraht geführt, bis die Lack- schicht durchgeschabt ist und somit ein elektrischer Kontakt zwischen Stahlstift und Kupferdraht hergestellt ist. Es wird die Anzahl der Doppelhübe registriert, die erforderlich sind, um diesen elektrischen Kontakt herzustellen. Um etwa vorliegende Exzentritäten zu kompensieren wird der Draht zweimal um 120° gedreht und jeweils nach der Drehung erneut geprüft.

Die angegebenen Werte für Vergleichsbeispiel 1 werden in erster Näherung ebenfalls erreicht, wenn das Beschichtungsmittel gemäß Beispiel 2 mit einer etwa 1,5-fachen Lackiergeschwindigkeit aufgetragen wird.

## Beispiel 3

100 Gew.-Teile des in Beispiel 1 beschrieben Polyvinylformalharzes werden zusammen mit 86 Gew.-Teilen des nach Beispiel 2 hergestellten Polyisocyanates, 10 Gew.-Teile Phenolharz gemäß Beispiel 1, 7,6 Gew.-Teilen des Melaminformaldehydharzes gemäß Beispiel 1 und 1,6 Gew.-Teilen Zinkoctoat (8% Zn in einem Lösergemisch aus m.p. Kresol und Xylol (1 : 1 Gew.-Teile) so gelöst, daß der Festkörpergehalt 20% beträgt. Die Durchlaufzeit im DIN-Becher 4 mm bei 23°C beträgt 215 s.

Mit dieser Lacklösung wird auf einem 4 Meter Strahlungsofen ein Draht von 0,7 mm Durchmesser in 6 Passagen auf eine Schichtdickenzunahme von 50 μm lackiert, Abstufung der Düsendurchmesser 0,76/0,78/0,80/0,82/0,84/0,86.

Dem gleichen Verarbeitungsprozeß wird der Lack entsprechend Beispiel 1 unterzogen. Die Durchzugsgeschwindigkeit wurde von 10 m/min bis 24 m/min variiert. Die bei Bestimmung der Erweichungstemperatur (DIN 46453.2) erhaltenen Ergebnisse sind in Tabelle 2 aufgeführt.

## Tabelle 2

| Lackiergeschwindigkeit (m/min) | Erweichungstemperatur (°C) | |
|---|---|---|
| | Beispiel 1 | Beispiel 3 |
| 10 | 375 | 420 |
| 12 | 285 | 420 |
| 14 | 280 | |
| 16 | | 330 |
| 18 | | |
| 20 | 275 | |
| 22 | | 300 |
| 24 | 265 | 295 |

## Beispiel 4

4a) Entsprechend Beispiel 1, jedoch unter Verwendung eines Polyvinylformal-Harzes, welches als 10 gew.-%ige Lösung in Furfural bei 23°C eine Viskosität von ca. 65 mPa.s aufweist und ansonsten der Konstitution des in Beispiel 1 verwendeten Polyvinylformalharzes entspricht (®Vinylec K der Firma Chisso Corporation/Japan), wird unter Verwendung der in Beispiel 1 genannten Bindemittelkomponenten unter Verwendung von 1,9 Gew.-Teilen Zinkoctoat als Katalysator ein 4-Komponenten-Lack hergestellt, der allerdings wegen der geringeren Viskosität des Polyvinylformals unter Verwendung der in Beispiel 1 genannten Lösungsmittel auf einen Feststoffgehalt von 25% eingestellt wird.

4b) Herstellung einer Polyisocyanatkomponente :

Zu 5,000 g 4,4'-Diisocyanatodiphenylmethan werden innerhalb von 2 h bei 80°C 2160 g Kresol zugetropft, und man läßt bei 120°C reagieren. Nach ca. 4 h wird ein NCO-Gehalt von 11,8% erreicht ($NCO_{theor.}$ = 11,7%), und man verdünnt durch Zugabe von 3,070 g Methoxypropylacetat zu einer 70%igen Lösung mit einem NCO-Gehalt von 8,3% ($NCO_{theor.}$ = 8,2%).

Durch Zugabe von 20 g (0,2%) Methylphospholinoxid (einem technischen Gemisch aus 1-Methyl-1-phospha-2-cyclopenten-1-oxid und 1-Methyl-1-phospha-3-cyclopenten-1-oxid) wird die Carbodiimidbildung bei 60°C katalysiert und durch Messung der $CO_2$-Entwicklung verfolgt.

Nach ca. 12 h kommt die Gasentwicklung bei 220 l $CO_2$ (> 90% der theoretisch maximal zu erwartenden Menge) zum Stillstand. Die berechneten Umsätze bezogen auf die $CO_2$-Entwicklung und die Abnahme des NCO-Gehaltes verlaufen parallel.

Man erhält die Lösung eines blockierten Isocyanats mit folgenden Kenndaten :

| | |
|---|---|
| Konzentration | : ca. 70%ig |
| Viskosität (23°C) | : 6000 mPa.s |
| freier NCO-Gehalt | : < 0,1% |
| blockierter NCO-Gehalt | : 8,5% |

4c) Herstellung eines erfindungsgemäßen Lacks

100 Gew.-Teile des in Beispiel 4a) beschriebenen Polyvinylformalharzes werden in 394 Gew.-Teilen eines Lösergemischs aus gleichen Teilen Kresol und Xylol gelöst. Die erkaltete Lösung wird dann mit 86 Gew.-Teilen der in Beispiel 4b) beschriebenen 70%igen Polyisocyanatlösung versetzt und zu dieser Lösung 1,6 Gew.-Teile Zinkoctoat zugegeben.

4d) Verwendung

Die in Beispiel 4a) bzw. 4c) genannten Lacke werden unter Verwendung einer Labor-Drahtlackieranlage auf einen Kupferdraht mit einem Durchmesser von 0,7 mm aufgebracht. Die Ofentemperatur beträgt 500°C.

Es zeigt sich, daß der Lack 4a) schon ab einer Drahtlackiergeschwindigkeit von 90 m/min keine akzeptablen Eigenschaften des lackierten Drahtes erbringt, während der Lack 4c) noch bis zu einer Drahtlackiergeschwindigkeit von 120 m/min ein Eigenschaftsniveau des Lackdrahtes erbringt, das dem des Lackdrahtes entsprechend dem Stand der Technik eindeutig überlegen ist.

Beispiel 5

100 Gew.-Teile des niedrigviskosen Polyvinylformals gemäß Beispiel 4a) werden in einem Lösergemisch aus Benzylalkohol und Xylol im Gewichtsverhältnis 2 : 3 zu einer 20%igen Lösung gelöst.

Die erkaltete Lösung wird mit 214 Gew.-Teilen der entsprechend Beispiel 2 hergestellten Lösung des blockierten Isocyanates vereinigt. Dieser Lösung werden dann 2,5 Gew.-Teile Zinkoctoat (8% Zn enthaltend) zugesetzt. Man hat somit einen Lack von 35% Festgehalt.

Mit diesem Lack, bei dem somit ca. 20% Lösemittel eingespart wurde, wird entsprechend der Verarbeitung der Lacke der Beispiele 1 und 2 ein Kupferdraht von 0,7 mm Durchmesser auf einen Durchmesser von 0,755 mm lackiert.

```
Lackierbedingungen:  -  Vertikalofen
                     -  Ofenlänge:                    6 m
                     -  Ofentemperatur:             500° C
                     -  Anzahl der Passagen:          8
                     -  Abstufung der Abstreiferdüsen:
                        0,76/0,77/0,78/0,79/0,80/0,81/
                        0,82/0,83
```

Der mit einer Fahrgeschwindigkeit von 70 m/min gefahrene Lackdraht weist hervorragende Eigenschaften auf, die denen vergleichbar sind, die unter Verwendung des in Beispiel 2 beschriebenen Lacks erhalten worden sind.

## Patentansprüche

1. Zur Herstellung von Filmen und Überzügen geeignete, Lösungsmittel und Polyvinylacetal enthaltende Lackbindemittel, dadurch gekennzeichnet, daß sie Gemische aus

a)   Polyvinylacetalen
b)   (i) Carbodiimid- und/oder Uretonimingruppen und
     (ii) blockierte Isocyanatgruppen aufweisenden organische Verbindungen und
c)   Lösungsmitteln und gegebenenfalls weiteren Hilfs- und Zusatzmitteln darstellen,

wobei pro 100 Gew.-Teilen der Komponente a) 1 bis 300 Gew.-Teile der Komponente b) vorliegen.

2. Lackbindemittel gemäß Anspruch 1, dadurch gekennzeichnet, daß die Komponente a) ein Polyvinylformal darstellt.

3. Lackbindemittel gemäß Anspruch 1 und 2, dadurch gekennzeichnet, daß die Komponente b) 0 bis 25 Gew.-%. an Carbodiimidgruppen (berechnet als —N=C=N—) von 0 bis 30 Gew.-%, an Uretonimingruppen (berechnet als Struktureinheiten der Bruttoformel $C_2N_3O$) wobei die Summe aus Carbodiimid- und Uretonimingruppen (formal berechnet als —N=C=N—) bei 0,5 bis 25 Gew.-% liegt, und einen Gehalt an blockierten Isocyanatgruppen (berechnet als NCO) von 1 bis 25 Gew.-% aufweist.

4. Verwendung der Bindemittel, gemäß Anspruch 1 bis 3 in Beschichtungsmitteln für hitzeresistente Substrate.

5. Verwendung gemäß Anspruch 4 in Drahtlacken.

6. Verfahren zur Herstellung von Drahtlackierungen durch Beschichtung von Drähten mit einem Bindemittel, inerte Lösemittel und gegebenenfalls die aus der Lacktechnologie üblichen Hilfs- und Zusatzmittel enthaltenden Drahtlack unter anschließender Aushärtung der Beschichtung bei Temperaturen von oberhalb 80°C, dadurch gekennzeichnet, daß man solche Beschichtungsmittel verwendet, die als Bindemittel solche gemäß Anspruch 1 bis 3 enthalten.

7. Eine Lackschicht aufweisende, hitzeresistente Substrate, insbesondere Metalldrähte, wobei die Lackschicht durch Applikation eines Beschichtungsmittels und anschließende Aushärtung des Beschichtungsmittels erhalten worden ist, dadurch gekennzeichnet, daß es sich bei dem Beschichtungsmittel um ein solches handelt, welches als Bindemittel solche gemäß Anspruch 1 bis 3 enthält.

## Claims

1. Paint binders containing solvents and polyvinyl acetal suitable for the production of films and coating, characterized in that they are mixtures of

a)   polyvinyl acetals
b)   organic compounds containing
     (i) containing carbodiimide and/or uretone imine groups and

(ii) blocked isocyanate groups and

c) solvents and optionally other auxiliaries and additives,

1 to 300 parts by weight component b) being present per 100 parts by weight component a).

2. Paint binders as claimed in claim 1, characterized in that component a) is a polyvinyl formal.

3. Paint binders as claimed in claims 1 and 2, characterized in that component b) contains 0 to 25% by weight carbodiimide groups (expressed as $-N=C=N-$), 0 to 30% by weight uretone imine groups (expressed as structural units corresponding to the empirical formula $C_2N_3O$), the sum of carbodiimide and uretone imine groups (formally expressed as $-N=C=N-$) being 0.5 to 25% by weight, and 1 to 25% by weight blocked isocyanate groups (expressed as NCO).

4. The use of the binders claimed in claims 1 to 3 in coating compositions for heat-resistant substrates.

5. The use claimed in claim 4 in wire enamels.

6. A process for the production of wire enamellings by coating of wires with a wire enamel containing binders, inert solvents and optionally the auxiliaries and additives typically used in paint technology and subsequent curing of the coating at temperatures above 80°C, characterized in that the coating compositions used contain a binder as claimed in claims 1 to 3 as binder.

7. Heat-resistant substrates, more particularly metal wires, coated with a layer of paint, the paint layer having been obtained by application of a coating composition and subsequent curing of the coating composition, characterized in that the coating composition is one which contains a binder as claimed in claims 1 to 3 as binder.

## Revendications

1. Liants pour vernis destinés à la production de films et de revêtements, contenant un solvant et un polyvinylacétal, caractérisés en ce qu'ils constituent des mélanges

a) de polyvinylacétals

b) de composés organiques portant

    (i) des groupes carbodiimide et/ou des groupes urétone-imine et

    (ii) des groupes isocyanato protégés et

c) de solvants et le cas échéant d'autres substances auxiliaires et additifs,

1 à 300 parties en poids du composant b) étant présentes pour 100 parties en poids du composant a).

2. Liants pour vernis suivant la revendication 1, caractérisés en ce que le composant a) représente un polyvinyl formal.

3. Liants pour vernis suivant les revendications 1 et 2, caractérisés en ce que le composant b) présente 0 à 25% en poids de groupes carbodiimide (exprimés en $-N=C=N-$), 0 à 30% en poids de groupes urétone-imine (exprimés en motifs structuraux de formule brute $C_2N_3O$), la somme des groupes carbodiimide et des groupes urétone-imine (calculée d'après la formule $-N=C=N-$) ayant une valeur de 0,5 à 25% en poids, et une teneur en groupes isocyanato protégés (exprimés en NCO) de 1 à 25% en poids.

4. Utilisation des liants suivant la revendication 1 à 3 dans des compositions de revêtement pour des substrats résistant à la chaleur.

5. Utilisation suivant la revendication 4, dans des vernis pour fils métalliques.

6. Procédé de production de vernissages de fils métalliques par revêtement de fils avec un liant, un vernis pour fils métalliques contenant des solvants inertes et le cas échéant les substances auxiliaires et les additifs d'emploi classique pour la technologie des vernis, puis durcissement du revêtement à des températures dépassant 80°C, caractérisé en ce qu'on utilise des compositions de revêtement qui contiennent des liants suivant les revendications 1 à 3.

7. Substrats, notamment fils métalliques résistant à la chaleur, portant une couche de vernis, cette dernière ayant été obtenue par application d'une composition de revêtement suivie de son durcissement, caractérisés en ce que la composition de revêtement est une composition qui contient comme liant un liant suivant les revendications 1 à 3.